# EUROPEAN PATENT SPECIFICATION

(11) **EP 0 297 720 B1**
(45) Date of publication and mention of the grant of the patent: **02.03.1994**
(21) Application number: 88304860.5
(22) Date of filing: 27.05.1988
(51) Int. Cl.: C11B 7/00, A23D 7/00, A23G 1/00

(54) **Fractionated soft laurin fat and food containing the same**
Weiches fraktioniertes Laurinfett und dieses enthaltende Nahrungsmittel
Graisse laurique molle et aliment la contenant

(30) Priority: 30.05.1987 JP 137109/87; 16.12.1987 JP 319840/87; 12.04.1988 JP 91198/88
(43) Date of publication of application: 04.01.1989
(73) Proprietor: FUJI OIL COMPANY, LIMITED, Osaka-shi Osaka (JP)
(72) Inventor: Baba, Hideki, Sennan-gun Osaka-fu (JP); Maeda, Hirokazu, Sakai-shi Osaka-fu (JP); Kurooka, Akira, Sennan-gun Osaka-fu (JP); Nago, Artsushi, Izumisano-shi Osaka-fu (JP)
(74) Representative: Baverstock, Michael George Douglas

(56) References cited:
- GB-A- 2 093 679
- JP-A-60 241 853
- US-A- 4 086 370
- PATENT ABSTRACTS OF JAPAN, vol. 10, no. 112 (C-342)[2169], 25th April 1986; & JP-A-60 241 853
- H.P.KREULEN,Fractionation and Winterization of edible fats and oils,J.Am. Oil Chem.53,398(1976)

## Description

The present invention relates to a fractionated soft laurin fat and to a food containing that fat. More particularly, it relates to a fat having a plain taste which melts well in the mouth and which is composed of a fractionated soft fat of laurin fat having a specific composition. The invention also relates to a food containing the fat as part or all of its content of fatty ingredients, which melts well in the mouth and provides cold mouth feel and good taste.

Heretofore, liquid fat has been used as frying oil or spraying oil because it does not solidify at low temperature and is easy to use. Liquid fat is also used in various kinds of fatty food to improve the physical properties of the food or its ease of melting in the mouth. However, such a liquid fat is less stable to oxidation than a solid fat, and has other disadvantages such as an oily taste.

On the other hand, laurin fat has good stability to oxidation and also melts well in the mouth while providing cold mouth feel and a plain taste. Therefore, it has been widely used in various fatty food such as, for example, chocolate; ice confectionery, e.g., ice cream; confectionery, e.g., margarine and shortening; whipped cream; coffee whitener and liquid or powdered dairy products, e.g., processed milk; frying oil for butter peanuts, etc.; spraying oil for Japanese crackers and the like.

However, it is difficult to use laurin fat in the same manner as liquid fat because it is hard at low temperatures. Therefore, it is highly desirable to develop a fat having good stability to oxidation, which melts well in the mouth and has a good taste and which can be used in the same manner as a liquid oil.

JP-A-60 241 853 describes the preparation of chocolate for ice coating and discloses a fractionated soft oil of laurin fats and oils. However, this publication does not suggest any further fractionation to improve stability to oxidation without using any liquid oil.

It has been found that the above problems of conventional laurin fat and liquid fat can be solved by a soft fat obtained by refractionating a residual soft fat, obtained by fractionation of laurin fat to separate a hard butter component.

Thus, according to the present invention, there is provided a fat which comprises a fractionated soft fat of laurin fat having a iodine value of 30 - 40, a melting point not higher than 15°C, and a solid fat index (SFI) of 10 - 30 at 5°C, 0 - 20 at 10°C, 0 - 10 at 15°C and 0 at 20°C. The present invention also provides a food containing the fat as part or all of its content of fatty ingredients.

The present invention provides a fat having a plain taste and better oxidation stability in comparison with a liquid fat. The fat is more readily useable in place of a conventional liquid fat than is conventional laurin fat or a fractionated soft fat thereof, said fat being softer at low temperatures (and liquid at normal temperatures). Foods containing the fat as a part or all of their content of fatty ingredients melt well in the mouth and have a good taste.

The fractionated soft fat of laurin fat of the present invention can be obtained by fractionating laurin fat such as palm kernel oil, babassu oil, tacum oil, ouricuri oil, murumuru oil, etc., which contains lauric acid (having 12 carbon atoms) as a main constituent fatty acid. A known fractionation method may be employed such as solvent fractionation using acetone, hexane, etc.; fractionation using a surface active agent; dry fractionation using no solvent; Wintering method; or the like. However, accuracy is required in some degree. For example, when fractionation of laurin fat itself is carried out by a single stage fractionation method, it is necessary to use a large amount of a solvent because a large amount of crystals results. With the dry fractionation method, it is required to avoid excessive pressure. It can be noted, however, that when a residual soft fat obtained by separation of a high temperature fraction such as a hard butter component is fractionated, there is not need to pay attention to such accuracy.

In any event, the fractionated soft fat of laurin fat in the present invention has an iodine value of 30 - 40, a melting point of not higher than 15°C, and SFI of 10 - 30 at 5°C, o - 20 at 10°C, 0 - 10 at 15°C and 0 at 20°C. If the iodine value, melting point and SFI thereof are outside these ranges, it is difficult to substitute the fractionated soft fat for a liquid fat, or oxidation stability becomes inferior. Therefore, they should be within the above ranges. The term "melting point" as used herein means an ascending melting point.

The fat according to the present invention which comprises a fractionated soft fat of laurin fat is preferably a fractionated soft fat of palm kernel oil. One example of the fatty acid composition thereof is as follows.

| Fatty acid composition | | | |
|---|---|---|---|
| C 6 : 0 | 0.6 | C 16 : 0 | 6.7 |
| C 8 : 0 | 7.0 | C 18 : 0 | 1.7 |
| C 10 : 0 | 4.3 | C 18 : 1 | 30.9 |
| C 12 : 0 | 33.8 | C 18 : 2 | 5.9 |
| C 14 : 0 | 9.1 | | |

The fat of the present invention can have the fractionated soft fat of laurin fat as its sole fat ingredient. Alternatively, the fat of the present invention may contain one or more other fats or oils suitable for a desired final product.

The amount of additives included in the fat of the present invention is not limited and can be chosen according to the particular purpose of the fat.

The fat of the present invention has a plain taste, melts well in the mouth and has good oxidation stability in comparison with a liquid fat. Therefore, the fat according to the present invention can be advantageously used for various foods containing fat, for example, chocolate confectionery; ice confectionery such as ice cream; fats or oils for confectionery such as margarine, shortening and the like; liquid or powdery dairy products such as whipped cream, coffee cream, processed milk and the like; frying oil for butter peanuts; and spraying oil for Japanese crackers.

These foods are also within the scope of the present invention. The proportion of the fat of the present invention in a food is not specifically limited and is appropriately chosen based on the particular food and the desired formulation thereof. The fat can be used as part or all of the content of fatty ingredients of the food.

The other ingredients of the food are not specifically limited and, in particular, conventional ingredients can be used according to the particular kind of food.

The present invention is particularly useful for chocolate because the fat of the present invention can be used in the product in any proportion. The fat which has conventionally been used for manufacturing chocolate can be classified roughly into two types, i.e., tempering type and non-tempering type. When both types of fats are used simultaneously, blooming may occur, therefore it is disadvantageous to use both types of fats in any proportion. Thus, heretofore, chocolate has not been made which contains 80% by weight of non-tempering type fat such as laurin fat together with tempering fat such as cacao butter. According to the present invention, it is preferred that the fat of the present invention is used in a chocolate mix in an amount of 5 - 80% by weight, preferably 30 - 60% by weight based on the total amount of the fatty ingredients thereof. The chocolate produced according to the present invention preferably includes soft chocolate having soft mouth feel which is preserved at room temperatues of not higher than 25°C and served as it is; ice chocolate which is cast in a tray and cooled to solidify with refrigeration or freezing, then served in a cooled state; chocolate for coating which is used for bread and confectionery as a spread or coating material, particularly for ice coating which is used for ice confectionery such as ice cream or a shell which is molded in various shapes and filled with ice cream, and the like.

These chocolates can be produced according to a conventional manner by substituting 5 - 80% by weight of fatty ingredients in a conventional chocolate formulation with the fractionated soft fat of laurin fat.

Of course, in the present invention, chocolate such as milk chocolate or white chocolate can be produced by using whole milk powder as part of the raw materials. Therefore, milk fat can form part of the fatty ingredients thereof. In this case, tempering treatment is not required when chocolate is produced and stored under freezing. On the other hand, it is preferable to effect tempering treatment, when chocolate is produced and stored under refrigeration or normal temperature.

The shape of the chocolate can be varied depending upon the above uses. For example, molded chocolate may be in a plate-like shape and ice chocolate may be in a massive shape. Further, the chocolate may be in the form of powder, tips, rods, pellets, lamellae, stones, chanks and the like, which is suitable for use as topping of ice confectionery such as ice cream or dessert. The chocolate may be normal dark chocolate but may also be colored chocolate of various colors. For example, ice confectionery or dessert wherein chocolate having various colors or tastes obtained by mixing fruits such as orange, lemon, strawberry and the like and nuts such as hazelnut, peanut, almond and the like maybe dispersed therein; such chocolate combines beautiful appearance with good taste and, therefore stimulates the appetite.

On the other hand, for example, chocolate obtained by using a liquid fat such as soy bean oil instead of the fractionated soft fat of laurin fat of the present invention has poor stability and no cold mouth feel is obtained.

Furthermore, the present inventors have found that, if a large amount of the residual soft fat obtained by separating a hard butter component of lauric type fat having SFI of 20 - 35 at 5°C, 15 - 30 at 10°C, 10 - 25 at 15°C, 2 - 15 at 20°C and less than 3 at 25°C, is used with cacao butter to produce chocolate, a tempering treatment can be effected which prevents blooming. Thus, the inventors have filed an application (Japanese Patent Application No. 36299/1987 entitled "Chocolate having cold mouth feel"). However, such chocolate tends to harden with time. On the other hand, in the chocolate of the present invention, such a time dependent hardness change is improved.

The following Examples and Comparative Examples further illustrate the present invention in detail but are not to be construed to limit the scope thereof. In the Examples and Comparative Examples, all the "parts" and "%'s" are by weight, unless otherwise stated.

### Example 1

A residual soft fat (1 part) having an iodine value of 26.0 obtained by fractionation of palm kernel oil according to a conventional method to separate off a hard butter fraction therefrom was dissolved in 99.5% acetone (4 parts) and cooled to -5°C with stirring. After maintaining at this temperature for 45 minutes, crystals separated out were filtered off and washed with acetone at -5°C.

Then, the solvent was removed from the filtrate to obtain the desired soft fat (yield: 57.0%) having an iodine value of 35.4, a melting point of 13°C, and a SFI (measured after maintaining at 0°C for 20 hours, hereinafter the same measurement was employed) of 23.5 at 5°C, 6.0 at 10°C and 0 at 15°C.

This fat had an AOM stability time of 105 hours (Vitamin E 100 ppm is added to the fat, hereinafter the same procedure was employed), melted well in the mouth with cold mouth feel and a plain taste. On the other hand, refined soy bean oil had an AOM stability time of 15 hours and an oily taste.

### Example 2

Palm kernel oil (1 part) was dissolved in 99.5% acetone (5.6 parts) and cooled to -2°C with stirring. After maintaining at this temperature for 20 minutes, crystals separated out were filtered off and washed with acetone at -2°C. Then, the solvent was removed from the filtrate to obtain the desired soft fat (yield: 41.3%) having an iodine value of 31.6, a melting point of 14.5°C, and a SFI of 28.6 at 5°C, 13.7 at 10°C and 0 at 20°C.

Like the product of Example 1, the resulting fat had an AOM stability time of 120 hours, and melted well in the mouth with cold mouth feel and a plain taste.

### Example 3

A residual soft fat (1 part) having an iodine value of 25.8 obtained by fractionation of palm kernel oil according to a conventional method to separate a hard butter fraction therefrom was dissolved in 99.3% acetone (4 parts) and cooled to -7°C with stirring. After maintaining at this temperature for 45 minutes, crystals separated out were filtered off and washed with acetone at -7°C. Then, the solvent was removed from the filtrate to obtain the desired soft fat (yield: 56.1%) having an iodine value of 36.2, a melting point of 11.4°C, and a SFI of 21.7 at 5°C, 4.8 at 10°C and 0 at 15°C.

Like the products of the above Examples, the fat had an AOM stability time of 97 hours, and melted well in the mouth with cold mouth feel and a plain taste.

### Example 4

The soft fat having the iodine value of 25.8 (1 part) as used in Example 3 was dissolved in 99.3% acetone (4 parts) and cooled to -4°C with stirring. After maintaining at this temperature for 45 minutes, crystals separated out were filtered off and washed with acetone at -4°C. Then, the solvent was removed from the filtrate to obtain the desired soft fat (yield: 56.1%) having an iodine value of 33.3, a melting point 13.8°C, a SFI of 28.8 at 5°C, 13.9 at 10°C, 2.1 at 15°C and 0 at 20°C.

Like the products of the above Examples, the fat had an AOM stability time of 115 hours, and melted well in the mouth with cold mouth feel and a plain taste.

### Example 5

### Preparation of soft chocolate

By using the soft fat of fractionated palm kernel oil obtained in Example 1, chocolate was produced according to the following formulation. That is, a mixture of cacao mass (16 parts), whole milk powder (20 parts), powdered sugar (42 parts), the soft fat obtained by fractionation of palm kernel oil (22 parts), lecithin (0.5 part) and a suitable amount of vanillin was treated according to a conventional manner by refining, conching and tempering. The tempering could be carried out without any trouble. Then, the resulting mixture was cast in a pudding-shaped cup and rapidly cooled to obtain soft chocolate.

Although the resulting chocolate was allowed to stand at 20°C for 21 days, no blooming was observed. The chocolate maintained softness at normal temperature without change in hardness with time and also melted well in the mouth with pleasant cold mouth feel.

### Preparation of ice chocolate

The same chocolate mixture as described above was treated by refining and conching without tempering, and then cast in the same shaped mold at 40 to 50°C and rapidly cooled in a freezer to obtain ice chocolate.

Although the resulting chocolate was allowed to stand in a freezer for a month, it maintained hardness and also melted well in the mouth with cold mouth feel. This ice chocolate was slightly softer than the above soft chocolate.

### Example 6

### Preparation of chocolate for ice-coating

A mixture of cocoa (11 parts), powdered sugar (20 parts), coconut oil (20 parts), the soft fat of fractionated palm kernel oil (44 parts) obtained in Example 1, lecithin (0.5 part) and a suitable amount of vanillin was treated according to a conventional manner by refining and conching to obtain chocolate for ice-coating.

Although the resulting chocolate was warmed at 40°C and then coated on the surface of an ice-milk bar stored at -20°C, there was no trouble in workability such as drying period, viscosity and the like. This chocolate melted well in the mouth with pleasant cold mouth feel.

### Example 7

### Prepartion of molded (plate) milk chocolate

A mixture of cacao mass (15 parts), whole milk powder (20 parts), powdered sugar (35.5 parts), cacao butter (19 parts), the soft fat of fractionated palm kernel oil (10.5 parts) obtained in Example 1, lecithin (0.5 parts) and a suitable amount of vanillin was treated according to a conventional manner by refining, conching and tempering. The tempering could be carried out without any trouble. Then, the resulting mixture was cast in a mold (15 mm in width, 70 mm in length and 5 mm in thickness) and rapidly cooled to obtain molded chocolate.

Although the resulting chocolate was allowed to stand at 15°C for 21 days, it maintained its original hardness and also melted well in the mouth with pleasant cold mouth feel.

### Preparation of chocolate for sandwiching

The same chocolate mixture as described above was treated by tempering, and then whipped at room temperature of 15°C to obtain a whipped chocolate having over-run of about 50%.

The resulting whipped chocolate was sandwiched between normal solid chocolate and biscuit.

### Preparation of chocolate for coating

The same chocolate mixture as described above was treated by tempering, and then coated on a sponge cake.

Although the resulting confectionary was allowed to stand at 15°C for 21 days, each chocolate maintained its original hardness and also melted well in the mouth with pleasant cold mouth feel.

### Comparative Example 1

Soft chocolate was produced in the same manner as described in Example 5 by substituting the soft fat of the fractionated palm kernel oil with palm oil. However, the tempering treatment could not be carried out sufficiently because of increase in viscosity. Also, blooming was observed, and the resulting chocolate had no commercial value.

### Comparative Example 2

Chocolate was produced according to Example 6 by substituting the soft fat of fractionated plam kernel oil with soy bean oil. The resulting chocolate did not have cold mouth feel.

### Example 8

### Preparation of shortening

To a mixed fat of hydrogenated fish oil having a melting point of 36°C (20 parts), hydrogenated fish oil having a melting point of 28°C (50 parts) and the soft fat of fractionated palm kernel oil (30 parts) obtained in Example 2 were added glycerol fatty acid ester (0.4 part) and sorbitol fatty acid ester (0.4 part), and the mixture was heated to dissolve and disperse each ingredient. Then, the resulting mixture was treated according to a conventional manner by rapid cooling and conching in Votator to obtain shortening.

The resulting shortening (70 parts) was whipped by utilizing a coat mixer and sucrose syrup (70 Brix) was added to it when over-run thereof reached about 120%. Then, the mixture is slightly stirred to prepare butter cream having over-run of about 100%.

Thus, the resulting butter cream melted well in the mouth with pleasant cold mouth feel.

### Comparative Example 3

A butter cream was produced in the same manner as described in Example 8 by substituting the soft oil fractionated palm kernel oil with soy bean oil. The resulting butter cream is inferior to that of Example 8 in melting in the mouth and taste.

### Example 9

### Preparation of coffee cream

A mixture of hydrogenated rapeseed oil having a melting point of 28°C (15 parts), the soft oil of fractionated palm kernel oil (15 parts) obtained in Example 3, casein (4 parts), skim milk powder (3 parts), lecithin (0.1 part), sorbitol fatty acid ester (0.1 part), sucrose fatty acid ester (0.4 part), phosphate (0.15 part) and water (63 parts) was treated in a conventional manner by pre-emulsifying, homogenizing, sterilizing and cooling to obtain coffee cream.

The resulting coffee cream had a viscosity of 2.4 Ns/m² (240 centipoise) at 5°C and also had cream taste.

### Comparative Example 4

Coffee cream was produced according to the same manner as described in Example 9 by substituting the soft oil of fractionated palm kernel oil with rapeseed oil. The resulting coffee cream had a viscosity of 2.55 Ns/m² (255 centipoise) and also had oily taste in comparison with that of Example 9.

Although both creams, prepared in Example 9 and Comparative Example 4 were directly exposed to sunlight for 30 minutes, the cream of Example 9 maintained its pleasant taste. On the other hand, the cream of Comparative Example 4 became extremely oily.

### Example 10

### Fat for spraying

Each laurin fractionated soft fat prepared in Example 1 - 4 was sprayed on the surface of commercially available Japanese cracker in an amount of about 15 weight % based on the total weight of the cracker. For comparison, according to the same manner, a commercially available salad oil was sprayed on the same cracker. When the laurin fractionated soft fat prepared in the above Example was sprayed on the cracker, the product had a plain taste and gave good gloss. Therefore, this fat was suitable for use as a fat for spraying. On the other hand, when the salad oil was sprayed on the cracker, the product had oily taste.

## Claims

1. A fat which comprises a fractionated soft fat of laurin fat characterized in that said fat comprises a fractionated soft fat of laurin fat having an iodine value of 30 - 40, a melting point of not higher than 15°C, and a solid fat index (SFI) of 10 - 30 at 5°C, 0 - 20 at 10°C, 0 - 10 at 15°C and 0 at 20°C.

2. A fat as claimed in claim 1, wherein the laurin fat is palm kernel oil.

3. A food containing a fat which comprises a fractionated soft fat of laurin fat characterized in that said fat comprises a fractionated soft fat of laurin fat having an iodine value of 30 - 40, a melting point not higher than 15°C, and a solid fat index (SFI) of 10 - 30 at 5°C, 0 - 20 at 10°C, 0 - 10 at 15°C and 0 at 20°C as part or all of its content of fatty ingredients.

4. A food according to claim 3, wherein the laurin fat is palm kernel oil.

5. A food according to claim 3, wherein the food is chocolate.

6. The use of a fat as claimed in claim 1 or claim 2 in a process for producing chocolate.

7. A method of producing a fat as claimed in claim 1 or claim 2 comprising refractionating a soft fat obtained by fractionation of laurin fat.

8. A chocolate which comprises a fat according to claim 1 or 2 in an amount of 5 to 80% by weight based on the total content of fatty ingredients.

9. A chocolate as claimed in claim 8 which comprises a fat according to claim 1 or 2 in an amount of 30 to 60% by weight based on the total content of fatty igredients.

## Patentansprüche

1. Fett, umfassend ein fraktioniertes Weichfett von Laurinfett, dadurch gekennzeichnet, daß das Fett ein fraktioniertes Weichfett von Laurinfett mit einer Iodzahl von 30-40, einem Schmelzpunkt von nicht mehr als 15°C und einem Festfettindex (solid fat index SFI) von 10-30 bei 5°C, 0-20 bei 10°C, 0-10 bei 15°C und 0 bei 20°C umfaßt.

2. Fett gemäß Anspruch 1, dadurch gekennzeichnet, daß das Laurinfett Palmkernöl ist.

3. Nahrungsmittel, enthaltend ein Fett, das ein fraktioniertes Weichfett von Laurinfett umfaßt, dadurch gekennzeichnet, daß dieses Fett ein fraktioniertes Weichfett von Laurinfett mit einer Iodzahl von 30-40, einem Schmelzpunkt von nicht mehr als 15°C und einem Festfettindex (solid fat index SFI) von 10-30 bei 5°C, 0-20 bei 10°C, 0-10 bei 15°C und 0 bei 20°C als Teil oder Gesamtmenge seines Gehalts an Fettbestandteilen umfaßt.

4. Nahrungsmittel gemäß Anspruch 3, dadurch gekennzeichnet, daß das Laurinfett Palmkernöl ist.

5. Nahrungsmittel gemäß Anspruch 3, dadurch gekennzeichnet, daß das Nahrungsmittel Schokolade ist.

6. Verwendung eines Fetts gemäß Anspruch 1 oder 2 in einem Verfahren zur Herstellung von Schokolade.

7. Verfahren zur Herstellung eines Fetts gemäß Anspruch 1 oder 2, umfassend die Refraktionierung eines Weichfetts, das durch Fraktionierung von Laurinfett erhalten wurde.

8. Schokolade, umfassend ein Fett gemäß Anspruch 1 oder 2 in einer Menge von 5 bis 80 Gew.-%, bezogen auf den Gesamtgehalt der Fettbestandteile.

9. Schokolade gemäß Anspruch 8, umfassend ein Fett gemäß Anspruch 1 oder 2 in einer Menge von 30 bis 60 Gew.-%, bezogen auf den Gesamtgehalt der Fettbestandteile.

## Revendications

1. Graisse comprenant une graisse laurique molle fractionnée, caractérisée en ce que ladite graisse comprend une graisse laurique molle fractionnée ayant une valeur de iode de 30-40, un point de fusion pas plus élevé que 15°C et un indice de graisse solide (SFI) de 10-30 à une température de 5°C, 0-20 à 10°C, 0-10 à 15°C et 0 à 20°C.

2. Graisse selon la revendication 1, caractérisée en ce que la graisse laurique est de l'essence de palme.

3. Aliment contenant une graisse qui comprend une graisse laurique molle fractionnée, caractérisée en ce que la dite graisse comprend une graisse laurique molle fractionnée ayant une valeur de iode de 30-40, un point de fusion pas plus élevé que 15°C, et un indice de graisse solide (SFI) de 10-30 à une température de 5°C, 0-20 à 10°C, 0-10 à 15°C et 0 à 20°C en tant que partie ou totalité de sa teneur en ingrédients gras.

4. Aliment selon la revendication 3, caractérisé en ce que la graisse laurique est de l'essence de palme.

5. Aliment selon la revendication 3, caractérisé en ce que ledit aliment est du chocolat.

6. Utilisation d'une graisse selon la revendication 1 ou la revendication 2 dans un procédé de fabrication de chocolat.

7. Procédé de fabrication d'une graisse selon la revendication 1 ou la revendication 2, comprenant le refractionnement d'une graisse molle obtenue par fractionnement de graisse laurique.

8. Chocolat comprenant une graisse selon la revendication 1 ou la revendication 2 dans une proportion de 5 à 80% en poids sur la base du contenu total des ingrédients gras.

9. Chocolat selon la revendication 8 comprenant une graisse selon la revendication 1 ou la revendication 2 dans une proportion de 30 à 60% en poids sur la base du contenu total des ingrédients gras.
